# EUROPEAN PATENT APPLICATION

(11) **EP 2 002 769 A1**
(43) Date of publication of application: **17.12.2008**
(21) Application number: 08009271.1
(22) Date of filing: 20.05.2008
(51) Int. Cl.: A47J 43/08, A47J 43/25, B26D 1/06, B26D 3/28

(54) **Linear food processor**

(30) Priority: 11.06.2007 US 811824; 31.10.2007 US 981956
(71) Applicant: Daka Research Inc., Road Town, Tortola (VG)
(72) Inventor: Mah, Pat Y., Tsim Sha Tsui Kowloon (HK); Kalogroulis, Alexander Joseph, Coulsdon Surrey CR5 3JE (US)
(74) Representative: Brophy, David Timothy

(57) **Abstract**

A linear movement food processor (21) may have a battery or power supply operation for portability and includes a set of reversible legs (25,27) to enable it to be positioned over a plate or container. A series of blades (55) are provided with an external mounting and storage area for quick selection. The drive mechanism utilizes a circular path pin engaging a drive slot (75) on a cutter plate (71), with the drive mechanism being directly liftable so that the remaining structure of the food processor (21) may be immersibly washed. One embodiment has a cutting stroke of 2.5 inches with a forward cutting stroke of about 0.25 seconds and a return stroke of about 0.25 seconds. In one embodiment a processed food catcher/storage box is provided for process food collection and stowage/storage of the food processor unit.

## Description

### Field of the Invention

The present invention relates to improvements in appliances used to prepare food, and more particularly to a mandolin-type device in which a blade moves linearly across an exposed food volume to produce food slices, and more particularly to a one touch, battery powered, stowable device which can work over any user's container in a manner providing a range of uses from straight food processor to a designer dish builder.

### Background of the Invention

A wide variety of food processors are known, the most famous being high powered slicers with motors having a power output in excess of one half horsepower and which has a specialized chopping space which follows the stroke of the blade. This type of device practically limits itself to bulk chopping operations. Unless the user has a large amount of food to be processed, it is not worth it to bring out the bulk food processor, set it up, process the food and then continually empty the container.

Washing of the blade, and container is a problem. The blade may have a number of small openings and require brush scrubbing in order to get it clean. Since the container which surrounds the blade participates in the cutting and grinding, the food particles may be ground into the surface and crevices. In many high powered food processors, the bins and interlocks have intricate geometrically arranged structures and small spaces which are almost impossible to reach without specialized tools.

The above problems are multiplied where it is sought to process a number of foods during one food processing session. The need to set up, process, break down, wash and then set up, can be onerous. For a thorough washing with regard to a full, powerful, food processor, the blade is not the only component to be washed. The container and its crevices must be washed.

A further multiplied problem is storage. As before, only large amounts of food will practically cause the user to use the bulk, powerful food processor. If large numbers of dishes are to be prepared, a number of storage bins must be provided to receive the processed food, to keep them separate before being used to complete the dish. Further, the processing of food in large processors produce an uneven and often compressed process food product.

Further, food processors having rotary blades will not work as well with some foods which need a straight blade pull over the volume of exposed food. Fibers from rotary grating can sometimes lodge on the rotary blade structures. Further, the use of a linear blade and linear motion can create a greater variety of process food effects to enable the user to create a greater variety of attractive prepared food presentations.

What is therefore needed is a food processor which includes advantages over the common, high powered bulk processor. The needed processor should be light, portable, eliminate a bin, container or tray which needs to be washed and re-washed, and enable blade substitution without a complex and time consuming build up and break down of the device.

### Summary of the Invention

A mandolin-type food processor has a number of features which give significant advantages over conventional food processors including battery or power supply operation to lighten and make the processor more portable, a set of reversible legs which enable the food processor to be positioned high over a plate or container so that sliced or grated food can drop onto a surface in a fluffy, non-compressed, and non molested fashion. This enables the user to use the food processor as a dispenser or a dish builder. As an example, where the food processor is loaded with Parmesan cheese, a user can simply position their plate underneath the food processor and simply push a button to dispense the finely grated, food product. In the alternative, the food processor can be used to build attractive dishes by loading it with the food item to be processed, selecting a blade and then position it over a series of plates to deposit the processed food. In commercial settings, a small number of people can each use the food processor to form an assembly line to create a completed gourmet dish in short order by carrying the food processor from plate to plate to add to the dish. This is especially useful when battery power is relied upon when used by caterers who cannot count on the presence of external electrical power in catering locations.

A series of blades are provided with an external mounting and storage area for quick selection and loss prevention. Most food processors do not support their blades when not in use and they can become lost or destroyed, resulting in additional time spent in searching or in extra expense. A plunger guard has the shape of a deep box and has a blocking action to provide a pushing action while blocking access to the feed chute. The feed pusher/plunger also has slots which can accommodate the presence of a hopper divider which is utilized when smaller or narrower food objects will be processed in order to keep them aligned within an effectively smaller formed hopper.

The mechanism of the food processor involves the use of a motor which turns a mechanically advantaged main gear having a guide pin which engages a cutter plate which reciprocates within a main housing channel. The main housing channel is an annular channel open at both ends, into which the cutter plate can translate in an almost frictionless manner due to rolling support wheels. An appropriate blade is loaded into the cutter plate by simply placing it into a mating slot in the cutter plate. The cutter plate is simply urged back into the channel housing. Simply pressing the button causes the drive gear's drive peg to reengage the cutter plate and causes it to translated back and forth just underneath a hopper. The upper side of the channel has a hopper opening while the bottom of the channel housing includes a discharge opening. Each time the cutter plate moves forward against the food in the hopper, an amount of processed food drops through the discharge opening an onto the surface below. The surface moved into position below can be a plate, an expanse of paper, a cutting board or counter top.

The food processor may ideally have four battery cells, such as AA size cells. Cutting occurs quickly to take advantage of the momentum of movement of the cutter plate as well as the turning momentum of the main gear wheel. One embodiment of the food processor which has been found to work well involves a cutting stroke of 2.5 inches with a forward cutting stroke of about 0.25 seconds and a return stroke of about 0.25 seconds.

The invention, its configuration, construction, and operation will be best further described in the following detailed description, taken in conjunction with the accompanying drawings in which:

Figure 1 is a perspective view of one embodiment of the food processor shown in leg storage position with the blade storage area unoccupied for visual reference;

Figure 2 is a perspective view of the food processor shown Figure 1 with the legs shown in operable position and with the full set of blades seen supported in the blade storage position;

Figure 3 is an exploded view of the food processor of Figures 1 and 2 with the legs removed and with the cutter plate displaced away from the main housing channel;

Figure 4 is a view looking more downwardly into the main housing channel and into the drive opening and the through opening through the hopper;

Figure 5 is a view illustrating the components within the motor housing;

Figure 6 is a perspective view of an alternative embodiment shown over a bowl and without legs, and having end inserts for ease of carrying and to provide lower clearance for holding over objects where processed food is to fall;

Figure 7 is a perspective view looking upward at the two plungers, including a smaller inner plunger and a larger outer plunger and illustrating how they interfit and the relationship of the outer edges of their upper rims;

Figure 8 is a perspective view looking down on the food processor and illustrating the smaller inner plunger as slightly displaced from the food processor;

Figure 9 is a view similar to that of Figure 8, but wherein a perspective view looking down on the food processor and illustrating the larger outer plunger as slightly displaced from the food processor;

Figure 10 is a view of the food processor of Figures 6-10 shown mounted on a processed food catcher/storage box;

Figure 11 is a view of the food processor as seen in Figure 10, but with the processed food catcher/storage box removed from underneath the food processor and placed on top of the food processor and protectively enveloping it;

Figure 12 illustrates an alternative embodiment with curved slotted legs supporting the food processor and with the legs in a downwardly extending position ready for activation of the food processor;

Figure 13 is a view of the food processor as seen in Figure 12, but with curved slotted legs previously supporting the food processor removed, turned 180° to point upward to achieve a storage position;

Figure 14 is an exploded view of the food processor as seen in Figures 6-13 and showing the internal components thereof;

Figure 15 is an exploded view of the motor housing and illustrating some components thereof;

Figure 16 is a perspective view illustrating the safety interlock switch in the off position; and

Figure 17 is a perspective view as seen in Figure 16 and illustrating the safety interlock switch in the one position to enable operation of the food processor upon insertion of the larger outer plunger.

### Detailed Description of the Preferred Embodiment

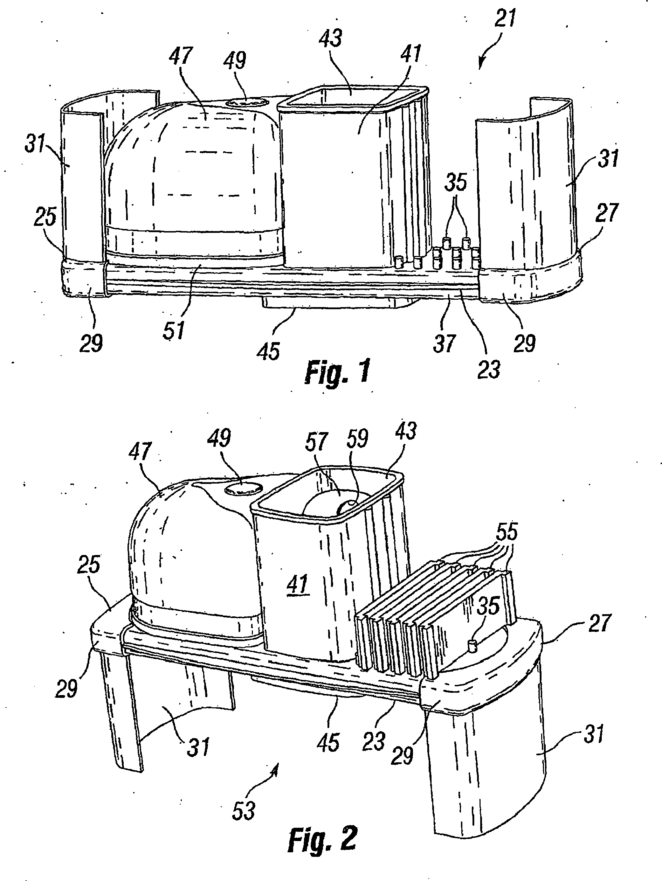

Referring to Figure 1, a food processor 21 is seen in an upright, but storage position. A main housing channel 23 has a pair of ends which are slip-fit engaged by a pair of identical legs 25 and 27. Each of the legs 25 and 27 includes a housing channel engaging flange 29 and a curved planar support skirt 31. The housing channel engaging flange 29 slides onto and envelops and closes the end of the main housing channel 23. The curved planar support skirt 31 provides a stable standing support for stably maintaining the housing channel 23 above the surface upon which the user wishes processed food to drop under the influence of gravity. The assembled and freestanding orientation is shown in Figure 2. To change the position of the legs 25 and 27, they need only to be pulled away from the open end of the housing channel 23, and rotated one hundred eighty degrees and then re-attached over the open end of the housing channel 23. Either of the legs 25 and 27 can fit at either end of the housing channel 23 and in either the up position (as seen in Figure 1) or the down position (as seen in Figure 2).

Just to the left of the leg 27 a series of small upstanding vertical pegs 35 are seen extending upward from an upper surface 37 of the housing channel 23 which are used to supportably store blade assemblies. To the left of the vertical pegs 35, a hopper 41 is seen, into which an annular conforming plunger 43 is seen. The annular conforming plunger has a shape to nearly completely displace the internal volume of the hopper 41, as well as slots which enable it to accommodate hopper dividers so that it can also simultaneously displace the volume of a smaller volume between one or more hopper dividers (not seen in Figure 1).

Below the hopper 41, and on the other side of the main housing channel 23 is a food outlet 45 which extends only slightly below the main housing channel 23. This slight downward protrusion serves to give a ready visual indication of the area of food discharge, as well as to provide some additional protection should a blade be located in the cutter plate (not shown in Figure 1) and where the food processor 21 is placed in a storage position seen in Figure 1 and where it is placed on a table or other surface in the configuration shown.

To the left of the hopper 41 is a motor housing 47 which supports an activation button 49 at a top portion. The operation of the food processor 21 is had with the simply pressing of the activation button 49. The motor housing 47 sits within a flange 51 to provide exact mounting location while permitting lifting removal. The mechanical link between the motor housing 47 and structures within the main housing channel 23 is a self-locating drive pin (not shown in Figure 1) and thus the motor housing 47 can be easily removed so that the remaining portion of the food processor can be cleaned, even in a harsh cleaning environment.

Referring to Figure 2, a perspective view similar to that seen in Figure 1, but taken from a slightly upper perspective looking downward illustrates the food processor 21 with the legs 25 and 27 having been removed and re-installed one hundred eighty degrees shifted to extend downwardly to support the main housing channel 23 in an elevated position.

As can be seen the pair of legs 25 and 27 lift the annular housing 23 to a position above the surface which supports the food processor 21 to form a clearance way 53 underneath the annular housing 23 in which structures such as plates, flat paper, dishes, bowls, chopping boards and a variety of other structures (not shown) may be freely laterally moved into and out of such clearance way 53 to receive processed food. In this configuration, the user of the food processor 21 can elect to leave it standing and to insert a series of plates underneath it, within the clearance way 53 one at a time for receiving processed food. This enables an assembly line process where different dishes are moved one at a time underneath one food processor 21.

In the alternative, the user can create a complete table setup and simply place the food processor 21 directly over a plate to dispense processed foods. This enables the food processor 21 to be used in either a single dispensing process, or it enables a number of the food processors 21 to be sequentially brought to plates on a table setup to build dishes in place, such as the building of a salad.

The vertical pegs 35 previously seen are seen as engaging a series of blade insert assemblies 55 which use the pegs 35 for a friction fit at the non-flanged edges. The blade insert assemblies are shown in schematic form in Figure 2 and in detail would have some structure, either a blade, grater or scraper. Further to the left, and within the hopper 41, one hopper divider 57 is seen and which is actually extending through the annular conforming plunger 43 (via slots to be shown). Hopper divider 57 has a circular aperture 59 to assist in grasping it.

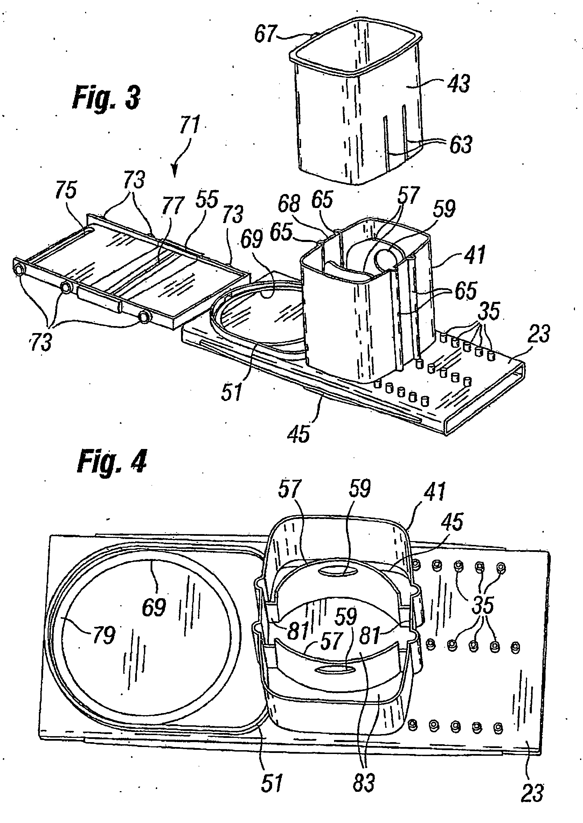

Referring to Figure 3, an exploded view of the food processor 21 with the motor housing 57 removed and with the identical legs 25 and 27 removed. It can be seen that the main housing channel 23 has an oval end profile. It is understood that the main housing channel 23 can assume different forms, but that the laterally enveloping channel structure has a number of advantages, including structural integrity and the ability to have stable end attachments, such as legs 25 and 27. The main housing channel 23 also forms a natural and stable track for translation of a food-processing member.

As can be seen in Figure 3, the annular conforming plunger 43 has an external surface extent which is generally consistent with the volume of the hopper 41. Annular conforming plunger 43 is seen as having a pair of slots 63 which extend from the lower corner of the annular conforming plunger 43 and to an upward extent sufficient to accommodate a support connection of the hopper dividers 57 with respect to the hopper 41.

As can be seen, a pair of ribs 65 extend upward on each side of the hopper 41. These ribs form internal channels by which the hopper dividers 57 can engage for lateral support. The slots 63 on the annular conforming plunger 43 allow it to fully sweep the volume within the hopper 41 whether the hopper dividers 57 are present or not. Again, the hopper dividers 57 are for use where the food material to be fed has a smaller effective area than the hopper 41 but where it is desired to provide a smaller effective area in order to keep the food to be processed somewhat vertically oriented or laterally stabilized. The hopper 41 can be used with one or two hopper dividers 57. Further, since the slots 63 work in such close conjunction with the points where the hopper dividers 58 are attached, the hopper dividers 58 can have a wide variety of shapes within the hopper 41, and thus a wide variety of cross sectional area profiles. In some cases the food processor 21 can be supplied with a variety of hopper dividers 58.

To the left of the hopper 41, the flange 51 can be seen as extending circumferentially around an opening 69, through which the bottom inside of the main housing channel 23 can be seen, and which a portion of the open end of the main housing channel 23 can partially be seen. Regardless of the shape and extent of the flange 51, the opening 69 provides an area of sufficient circular extent to enable rotational force to be transmitted.

To the left of the main housing channel 23 a cutter plate 71 is seen. Cutter plate 71 is in essence a trolley which is designed to reciprocally operate within the housing channel 23 in a manner as frictionless as possible. As can be seen, the cutter plate 71 has a main body which has a shape to accommodate stably a series of blade insert assembly 55. The cutter plate 71 has a series of six side axles, each of which support a rotational wheel 73. The curvature of the internal area of the housing channel 23 can be shaped to minimize the friction of the cutter plate 71 as it moves axially through the housing channel 23. The lateral width of the main housing channel 23 and its internal shape is matched to the width of the combination of the cutter plate 71, side axles and wheels to maintain a low friction reciprocating action which is laterally stable without binding.

The end of the cutter plate 71 has a laterally extending drive slot 75 which is sized to accept a drive pin (not shown in Figure 3) and sized to allow such drive pin to reciprocate within the drive slot 75 in as frictionless a manner as possible. As will be seen, a spring plunger (not seen in Figure 3) can find and engage the drive slot 75 to engage the drive slot 75. As will be shown, the rotation of the spring plunger within the opening 69 will automatically engage the drive slot 75 and start the reciprocating action of the cutter plate 71 within the housing channel 23. Also seen is a blade 77 supported by the blade insert assembly 55. Blade 77 is one of several components which may be supported by the blade insert assembly 55, including graters and other blades having different heights and angles. Also partially seen on the other side of the annular conforming plunger 43 is a protruding rib 67 which interacts with a safety interlock switch on the motor housing 47 to inhibit actuation of the food processor 27 unless the annular conforming plunger 43 is at least partially in place. The rib 67 fits into a slot 68 on the hopper 41 between the ribs 65 adjacent the side of the hopper nearest the motor housing 47. This system will prevent a user from actuating the food processor 21 without the inside of the hopper 41 being isolated by use of the annular conforming plunger 43. In addition, the protruding rib 67 has a cut out portion so that when the annular conforming plunger 43 is fully inserted into the hopper 41, the power is cut by the cut out portion allowing the safety interlock switch to cut power to the motor. This will conserve the operation of the food processor 21 to instances when the hopper 41 has food to be processed.

Referring to Figure 4, a perspective view of the housing channel 23 and hopper 41 is seen from a more upward and downwardly looking view. The circular extent of the opening 69 is seen. A ledge 79 may be provided for additional stability, as well as any other interfitting configuration. Note that a significant support surface is provided within the flange 51, especially adjacent the hopper 41.

Within the hopper 41, the hopper divider 57 can be seen as having a curved surface. The hopper divider 57 terminates at a pair of oppositely located tabs 81 which interfit with the slots formed on the other side of the ribs 65. The uppermost extent of the tabs 81 are limited and extend no further upwardly than the uppermost extent of the slots 63 of the annular conforming plunger 43. As can be seen from the view in Figure 4, because the hopper divider 57 has its attachment depend from so limited an area, it can assume any shape. By assuming any shape, it can provide a smaller effective area, either between the hopper dividers 57 or between on hopper divider and the opposite wall of the hopper 41. Further, the space between the hopper dividers 57 and the wall of the hopper 41 can also be used. Other, specialized hopper dividers can be employed, such as those having annular tubes or other specialized structures to vertically support foodstuffs. Examples might include asparagus, carrots and the like.

As can be seen, the hopper 41 bottom is essentially completely open as a through opening 83. A portion of the flange of the food outlet 45 is seen at the far side of the through opening 83. Further, the ribs 65 lower extent and the pair of oppositely located tabs 79 prevent the hopper dividers 57 from passing into or through the lateral annular opening of the main housing channel 23. In this manner, the blade 77 will not contact the hopper dividers 57.

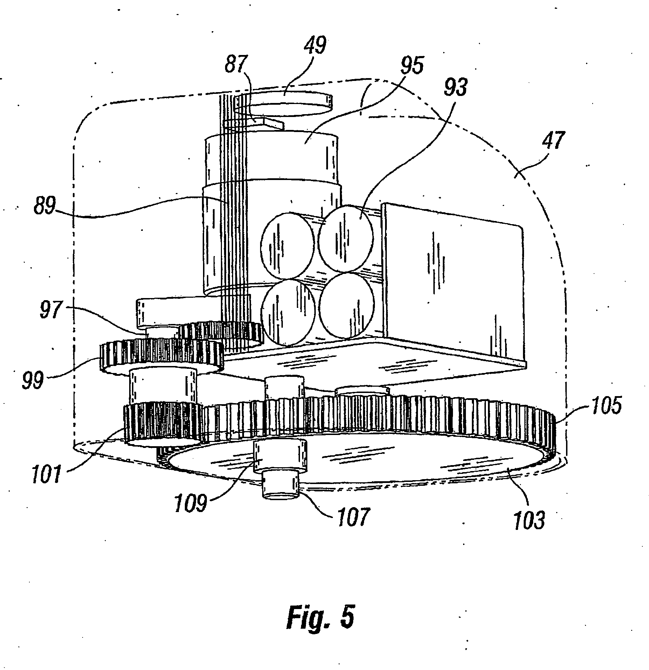

Referring to Figure 5, a view of the components within the motor housing 47 is seen with the face of the motor housing 47 which faces the hopper 41 most prominently seen. Button 49 is part of an actuation switch which is connected through a safety interlock switch 87 which operates in conjunction with a slot 89. As soon as the rib 67 enters the slot 89, safety interlock switch 87 is closed to permit the switch associated with the button 49 to actuate the food processor 21.

A series of batteries 93 are connected through the switch 87 and the switch associated with the button 49, to a motor 95. The motor 95 transmits mechanical power through a series of gears, including gears 97 and 99 to a drive pinion 101. The drive pinion 101 drives a main flat face gear 103 having teeth 105 about its outer periphery. The flat face insures that there are no obstructions or other structures which might inadvertently catch on the cutter plate 71.

From the otherwise flat face of the main flat face gear 103 a drive pin 107 extends downward from a spring housing 109. When the cutter plate 71 is inserted into the main channel housing 23, the drive slot 75 will be located at some position under the opening 69. When the motor housing 47 is replaced into its position within the flange 51, one of two states will occur. If the drive pin 107 happens to be in position to extend into the drive slot 75 no compression of the drive pin 107 into the spring housing 109 will occur.

In the more likely case where the drive pin 107 is not aligned with the drive slot 75, the drive pin 107 will be urged back into the spring housing 109 by contact with the upper surface of the cutter plate 71 adjacent the drive slot 75. As soon as the hopper 41 is loaded, the annular conforming plunger 43 is in place and the button 49 is pressed, the gear 104 starts to move and the drive pin 107 depressed within the spring housing 109 will begin to move about the upper surface of the cutter plate 71 adjacent the drive slot 75 until it aligns with the drive slot 75. At the moment of alignment, the drive pin 107 will be urged from the spring housing 109 and into the drive slot 75. As soon as the drive slot 75 is engaged, the cutter plate 71 will begin to reciprocate.

Because the reciprocation of the cutter plate 71 is in accord with the circular motion of the gear 103, the movement of the cutter plate 71 will be in accord with a sine-cosine relationship. The speed of reciprocation of the cutter plate 71 will be highest at the midpoint of its travel period. Although a cutting stroke of 2.5 inches with a forward cutting stroke of about 0.25 seconds and a return stroke of about 0.25 seconds has been mentioned to work well, any cutting stroke and forward/return stroke can be utilized with this food processor 21.

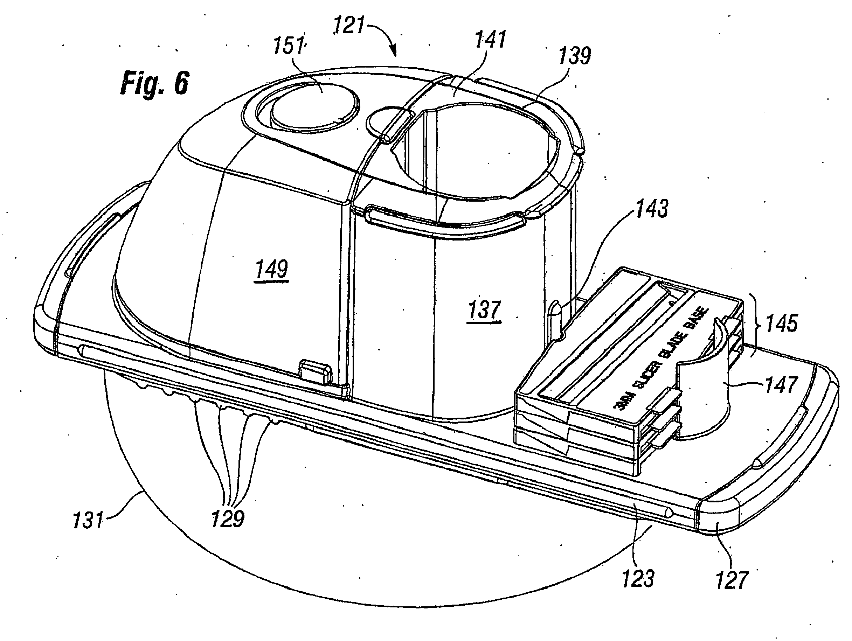

Referring to Figure 6, a further embodiment is seen as a stand-alone food processor 121 without the leg attachments seen in the earlier Figures. The design of the food processor 121 emphasizes its compactness, storability, and ability to be utilized without the need for legs or other support, other than that which may or may not be supplied by the user in the form of a deep plate, bowl, overlying surface with an aperture, or operated as a hand held unit, especially holding the food processor 121 over the areas over which sliced food is to be allowed to fall. The reciprocating nature of the mechanism thus described causes the food processor 121 to be idea for hand carried food distribution as the single stroke cycle is so predictable.

Referring again to Figure 6, food processor 121 has a main housing channel 123 having a pair of end inserts 125 and 127 which may be generally identical. The end inserts have a portion outside the insert portion to cause them to be generally continuous with the upper and lower surfaces of the main housing channel 127. The end inserts 125 and 127 act to isolate the components inside the main housing channel 127 and to cause the main housing channel 127 to be more comfortable to handle.

At the left underside of the main housing channel 127, a series of stability projections 129 are seen. The line of stability projections 129 appear on both sides near the edges of main housing channel 127, and acts to stabilize the food processor 121 when placed on a bowl, such as bowl 131 or other rimmed structure which can used the projections 129 to prevent slippage of the main housing channel 127 in the longitudinal direction.

Also seen is hopper 137 shown with a specially shaped plunger feeder assembly including a larger outer plunger 139 and a small inner plunger 141 present. The hopper 139 has a vertical exterior projection 143 which helps to stabilize a stack of various cutter/slicer/grating blade insert assemblies 145. At the other side of the stack of various insert assemblies 145 a curved upward projection 147 acts in concert with the vertical exterior projection 143 to stabilize the vertical stack of cutter/slicer/grating blade insert assemblies 145.

Closely adjacent the hopper 139, a motor housing 149 is located. The motor housing 149 supports an actuation button 151. As can be seen, the whole unit may be about a foot long and may be only about six inches high. The whole unit could be easily stored in a box about the size of a shoebox due to the elimination of the exterior projecting legs in this version of the foot processor 121. Further, the low profile makes the food processor 121 ideal for single use dispensing, such as sliced Parmesan. Or other storable foods where the complete food processor 121 could be cold stored.

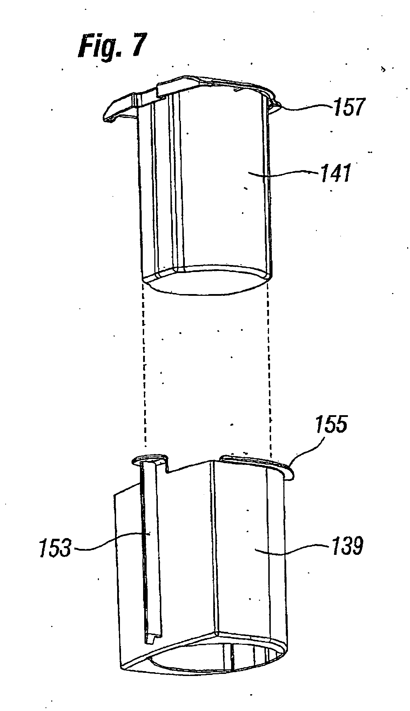

Referring to Figure 7 a perspective view of the small plunger 141 is shown over large plunger 143, and with dashed lines in between showing the manner of interfitting. Large plunger 139 is seen as having a rib 153 which works with an interlock switch which must be closed before the food processor 121 can be activated. The small plunger 141 fits within the larger plunger, but has a much smaller opening for very narrow objects. Small plunger 141 has complementary structures to the large plunger 139 to enable them to be easily manually separated. For example, large plunger 139 has an abbreviated rim 155 which can be manually reached because at the corresponding overlap of the small plunger 141, to covering lip extends. Likewise, the large plunger has an abbreviated tab 157 which extends outwardly where the abbreviated rim 155 of the large plunger 139 ends.

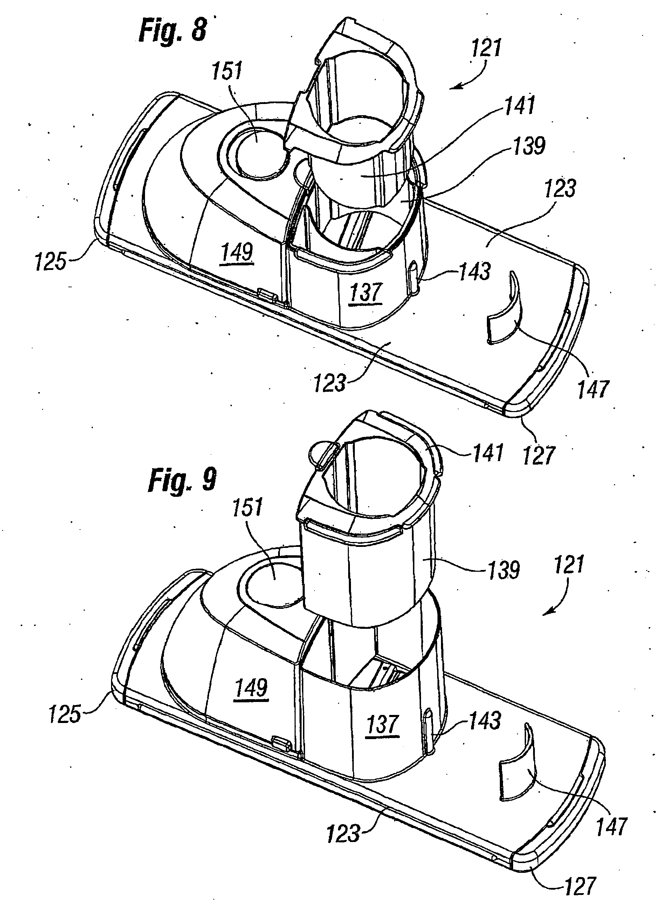

Referring to Figure 8, a perspective view of the food processor 121 is seen with the small plunger 141 displaced from the large plunger 141 and partially showing one of the cutter/slicer/grating blade insert assemblies 145 in operating position. Referring to Figure 9, a perspective view of the food processor 121 similar to that in Figure 8 is seen with the combination of the large plunger 139 and small plunger 141 displaced from the hopper 137.

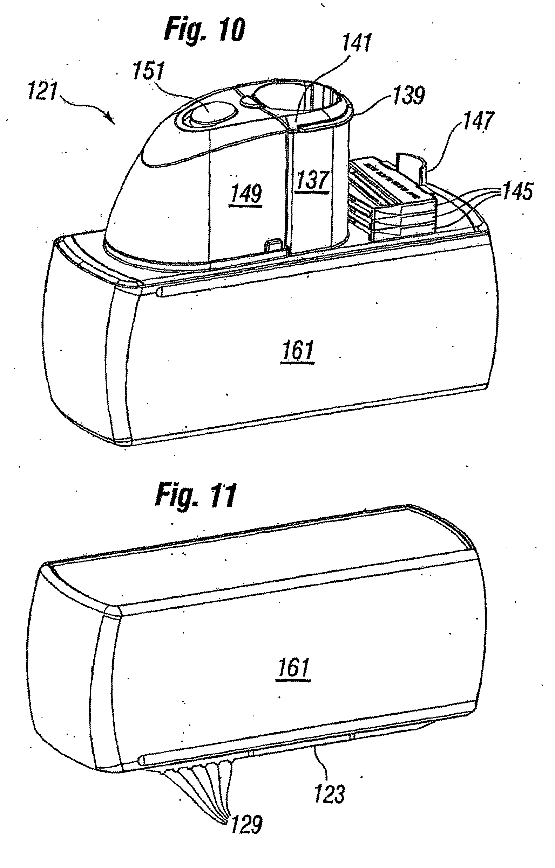

Referring to Figure 10, a perspective view of the food processor 121 is seen sitting above a processed food catcher/storage box 161. The processed food catcher/storage box 161 can be of any type and may have doors or drawers or other access openings. However, for illustration, the processed food catcher/storage box 161 will be considered as a foursided box with a bottom. The processed food catcher/storage box 161 can have upper surfaces to interfit perfectly with a combination of the main housing channel 123 and the pair of end inserts 125 and 127. A snap action could be engineered, or it may be that the combination of the main housing channel 123 and the pair of end inserts 125 and 127 rest atop the processed food catcher/storage box 161 purely under the influence of gravity.

In this mode of operation, any processed food is collected within the processed food catcher/storage box 161 until the food processor 121 is turned off, and removed from the processed food catcher/storage box 161 to enable its contents to be emptied. Processed food catcher/storage box 161 will ideally have enough capacity to hold a significant amount of processed food and when larger than the food processor 121 main housing channel 123 and pair of end inserts 125 and 127, it can double as a storage container.

Referring to Figure 11, the processed food catcher/storage box 161 is shown as removed from the main part of the food processor 121, including main housing channel 123 and pair of end inserts 125 and 127, and inverted and placed over the food processor 121, including main housing channel 123 and pair of end inserts 125 and 127. Note that stability projections 129 can be seen, indicating that the orientation of the food processor 121 within the Processed food catcher/storage box 161 is about the same as was seen in Figure 10.

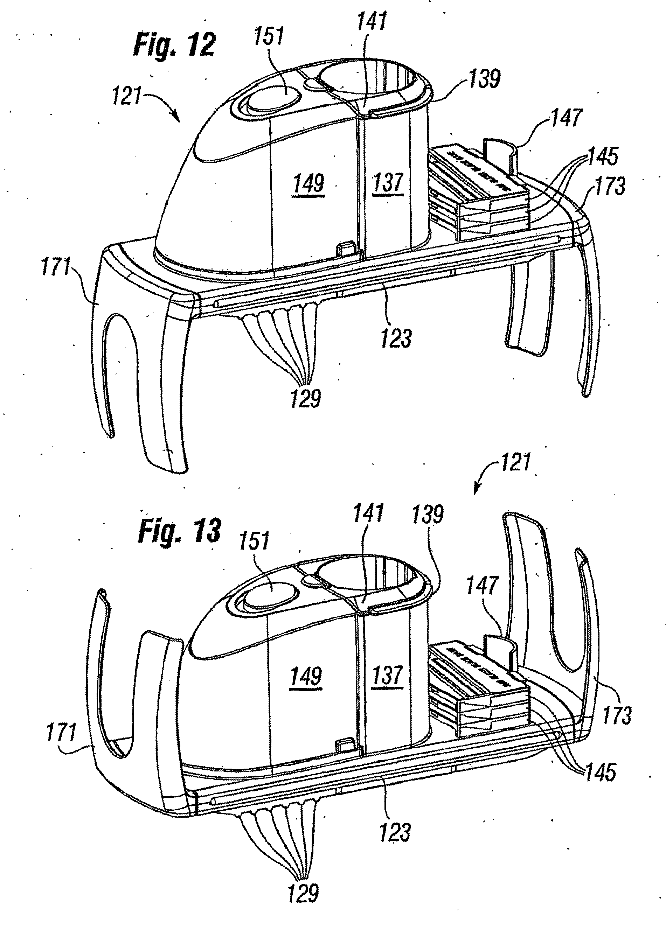

Referring to Figure 12, the food processor with a pair of slotted leg inserts 171 and 173 are shown attached to the main housing channel 123 in a downward position. The slots in the slotted leg inserts 171 and 173 enable the food processor to be picked up and moved more easily, as well as to not obstruct the end views of food falling from the food processor. Referring to Figure 12, the slotted leg inserts 171 and 173 are shown attached to the main housing channel 123 in a downward position, for storage. In this configuration, the same or nearly the same space is taken up for storage as was seen in Figure 11.

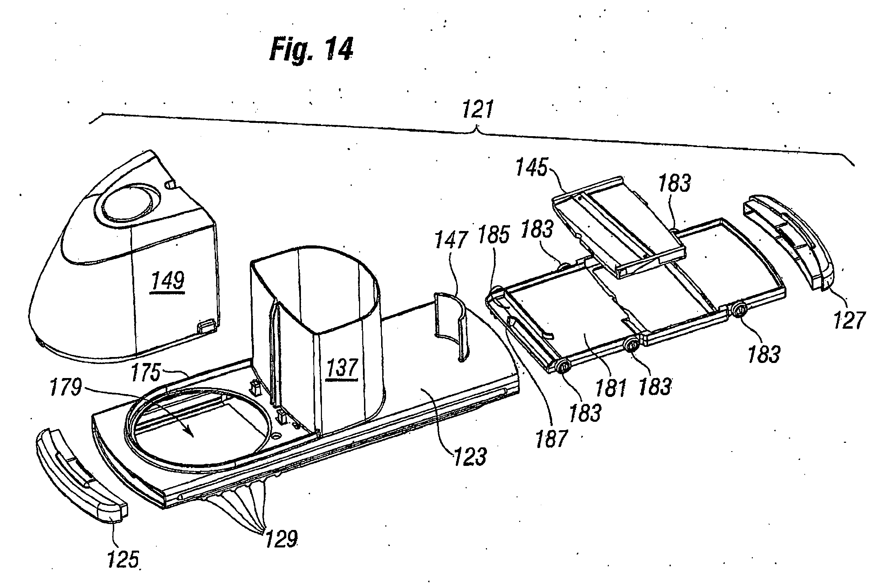

Referring to Figure 14, an exploded view of the food processor 121 with the motor housing 149 removed illustrates further components. It can be seen that the main housing channel 123 has an annular end profile. It is understood that the main housing channel 123 can assume different forms, but that the laterally enveloping channel structure has a number of advantages, including structural integrity and the ability to have stable end attachments. The main housing channel 123 also forms a natural and stable track for translation of a food-processing member.

As can be seen in Figure 14, to the left of the hopper 137, a flange 175 can be seen as extending circumferentially around an opening 179, through which the bottom inside of the main housing channel 123 can be seen. The opening 69 provides an area of sufficient circular extent to enable rotational force to be transmitted.

To the right of the main housing channel 123 a cutter plate 181 is seen. Cutter plate 181 is in essence a trolley which is designed to reciprocally operate within the housing channel 123 in a manner as frictionless as possible. As can be seen, the cutter plate 181 has a main body which has a shape to accommodate stably a series of various cutter/slicer/grating blade insert assemblies 145. The cutter plate 181 has a series of six side axles, each of which support a rotational wheel 73. The curvature of the internal area of the housing channel 123 can be shaped to minimize the friction of the cutter plate 181 as it moves axially through the housing channel 123. The lateral width of the main housing channel 123 and its internal shape is matched to the width of the combination of the cutter plate 181, side axles and wheels to maintain a low friction reciprocating action which is laterally stable without binding.

The end of the cutter plate 71 has a laterally extending drive slot 185 having a pair of flared openings to the drive slot 185 seen as flared opening 187 and flared opening 189. This feature can eliminate some of the demands on a spring loaded drive pin, as will be seen, by enabling the drive pin (not shown in Figure 14) to enter the drive slot more easily. The arrangement is possible where the drive motor drives in one direction.

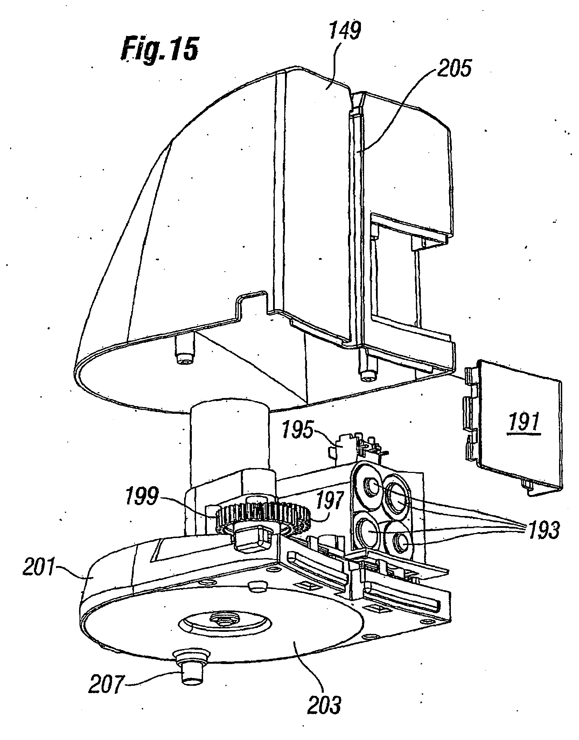

Referring to Figure 15, a view of the components within the motor housing 149 are seen in with the actual motor housing 149 exploded. A battery door 191 gives access to a set of four batteries 193. A motor 195 transmits mechanical power through a series of gears, including gears 197 and 199 to a drive pinion (now shown in Figure 15, but encased in a lower housing 201. The drive pinion (not shown) drives a main flat face gear 203, only the flat bottom of which is seen. The flat face insures that there are no obstructions or other structures which might inadvertently catch on the cutter plate 181.

From the otherwise flat face of the main flat face gear 203 a drive pin 207 extends downward from a spring housing 109. When the cutter plate 181 is inserted into the main channel housing 123, the drive slot 185 can capture the drive pin 207 either by springing extension or by entry through either of the flared opening 187 and flared opening 189. When the motor housing 149 with its motor assembly is replaced into its position within the flange 175, and activated, the drive pin 207 will find its way into the drive slot 185 through either of these mechanisms. As soon as the drive slot 185 is engaged, the cutter plate 181 will begin to reciprocate.

Because the reciprocation of the cutter plate 71 is in accord with the circular motion of the gear driven plate 203, the movement of the cutter plate 181 will be in accord with a sine-cosine relationship. The speed of reciprocation of the cutter plate 181 will be highest at the midpoint of its travel period, as before. Note that motor housing 149 includes a lockout guide slot 205 for accommodating the rib 153.

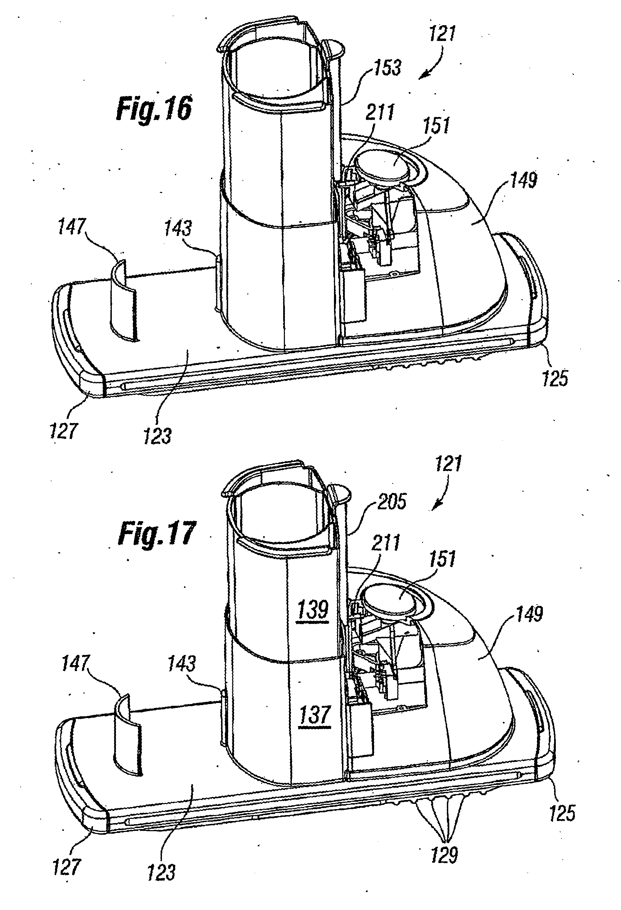

Referring to Figures 16 and 17 a general example of a lockout is given. In Figure 16 the position shown is just before the rib 153 enters the lockout guide slot 205. A link 211 is shown in unmoved position. Figure 17 shows the link in a moved position to provide enablement for the button 131 to operate the food processor 121.

While the present invention has been described in terms of a food processor, more particularly to a mandolin-type linear stroke interchangeable blade type food processor, a wide variety of alternate mechanisms can be used within the mechanisms disclosed can be applied to other devices.

Although the invention has been derived with reference to particular illustrative embodiments thereof, many changes and modifications of the invention may become apparent to those skilled in the art without departing from the scope of the invention. Therefore, included within the patent warranted hereon are all such changes and modifications as may reasonably and properly be included within the scope of this contribution to the art.

## Claims

1. A food processor comprising:
a main housing;
a pair of legs for positioning said main housing above any surface to form a clearance in which structures may be freely laterally moved for receiving processed food;
a hopper supported by said main housing for orientably loading food to be processed;
a cutter plate supported by said housing and reciprocatable with respect to said hopper, and into which a blade assembly may be mounted; and
a drive assembly supported by said housing and mechanically linked to the cutter plate.

2. The food processor as recited in claim 1 wherein said cutter plate has a drive slot and wherein said drive assembly includes a circular movement drive pin which engages the drive slot to move said drive assembly in a reciprocating motion.

3. The food processor as recited in claim 1 wherein said hopper includes structures for receiving a hopper divider and further comprising a hopper divider.

4. The food processor as recited in claim 1 and further comprising a plunger for interfitting within said hopper and wherein said plunger has an external volume substantially matching an internal volume of said hopper.

5. The food processor as recited in claim 3 and further comprising a plunger for interfitting within said hopper and wherein said plunger has an external volume substantially matching an internal volume of said hopper and wherein said plunger has a slot for accommodating said hopper divider such that said plunger can displace the internal volume of said hopper independent of the presence of said hopper divider.

6. The food processor as recited in claim 1 wherein said main housing includes structures for supporting a plurality of blade assemblies mountable with respect to said cutter plate.

7. The food processor as recited in claim 4 and wherein said plunger includes a protruding rib which extends outside of said hopper for activating a safety switch supported by said drive assembly to prevent actuation of said food processor unless the plunger is inserted at least partially within said hopper.

8. The food processor as recited in claim 1 wherein said drive assembly is removable from said main housing by lifting it from said main housing, to enable the food processor other than said drive assembly to be immersibly cleaned.

9. The food processor as recited in claim 1 wherein said main housing is annular tube shaped and includes a through opening aligned with said hopper and a drive opening aligned with said drive assembly.

10. The food processor as recited in claim 9 wherein each of said pair of legs further includes a housing channel engaging flange for fitting over an open end of said annular tube shaped main housing and where each of said pair of legs can be selectably fitted in an upwardly extending position for storage or a downwardly extending position for deployment of the food processor.

11. The food processor as recited in claim 9 wherein said cutter plate reciprocates within said annular tube shaped housing.

12. The food processor as recited in claim 11 wherein said cutter plate includes wheels supported by side axles and wherein the lateral dimension of said cutter plate, side axles and wheels is matched to an internal shape and lateral width of the annular tube shaped main housing to provide for a low friction reciprocating travel and a laterally stable path of travel.

13. The food processor as recited in claim 1 wherein said main housing includes a food outlet extending away from said main housing to protect said cutter plate and any blade assembly supported by said cutter plate.

14. The food processor as recited in claim 1 wherein said main housing includes a drive assembly flange extending away from said main housing for locating and permitting stable operation of the drive assembly with respect to said main housing.

15. The food processor as recited in claim 1 wherein said drive assembly further comprises:
a drive housing;
a motor supported by said drive housing; and
a main drive gear, driven by said motor and supporting a drive pin for engaging said cutter plate.
